# EUROPÄISCHE PATENTSCHRIFT

(11) **EP 1 431 851 B1**
(45) Veröffentlichungstag und Bekanntmachung des Hinweises auf die Patenterteilung: **19.08.2009**
(21) Anmeldenummer: 03027063.1
(22) Anmeldetag: 25.11.2003
(51) Int. Cl.: G05B 19/4097

(54) **Integrierte Werkzeugfertigung und -vermessung**
Integrated tool manufacturing and measuring
Fabrication et mesure d'outil intégré

(30) Priorität: 20.12.2002 DE 10261227
(43) Veröffentlichungstag der Anmeldung: 23.06.2004
(73) Patentinhaber: Walter Maschinenbau GmbH, 72072 Tübingen (DE)
(72) Erfinder: Simakov, Michael, Brighton Vic 3186 (AU); Morcom, Christopher, 29223 Celle (DE); Sachs, Carsten, 30455 Hannover (DE); Dilger, Christian, 70771 Leinfelden-Echterdingen (DE)
(74) Vertreter: Rüger, Barthelt & Abel Patentanwälte

(56) Entgegenhaltungen:
- EP-A- 0 893 747
- EP-A- 1 018 677
- DE-A- 19 625 542

## Beschreibung

Die Erfindung betrifft eine Einrichtung zu integrierten Werkzeugfertigung, sowie ein Verfahren zum Steuern einer Werkzeugmaschine und einer zugehörigen Messeinrichtung.

Zum Herstellen bzw. Schleifen von Werkzeugen werden häufig Werkzeugschleifmaschinen verwendet, in denen ein oder mehrere Werkzeuge, beispielsweise Schleifscheiben in mehreren Raumrichtungen gezielt bewegt und gedreht werden können, um komplizierte Geometrien, beispielsweise von Bohrern, Fräsern, Stufenbohrern oder dergleichen zu erzeugen. Dies erfolgt indem die entsprechenden Schleifscheiben einen Rohling bearbeiten, wozu der Rohling und/oder die Schleifscheiben auf vorgegebenen Bahnen bewegt werden. Die Bahnen werden durch Überlagerung von Bewegungen verschiedener Antriebs- und Führungseinrichtungen erzeugt. Diese werden wiederum von meinem Maschinensteuerungsprogramm, beispielsweise einem NC-Programm gesteuert. Die Erzeugung von entsprechenden NC-Programmen erfordert vom Bediener Kenntnis über die Maschinengeometrie, die NC-Programmierung und gutes räumliches Vorstellungsvermögen. Während der NC-Programmierer versucht, ein Programm so zu schreiben, dass die sich bewegenden Schleifscheiben an dem Rohling die von der Maßzeichnung vorgegebene Form erzeugen, muss er die Bewegung der einzelnen Komponenten (Rohling und Schleifscheiben) in Inkrementen vorgeben, die keine direkten Bezug zu den Zeichnungsdaten haben.

Aus der EP 1 018 677 A1 ist die Erzeugung von Maschinensteuerprogrammen mit einem virtuellen Teach-In-System bekannt. Dieses gestattet die Erstellung von Maschinensteuerprogrammen durch Manipulation graphischer Symbole auf einem Bildschirm ohne Kenntnis der Maschinensteuersprache.

Des Weiteren offenbart die EP 0 893 747 A2 eine Überwachungseinrichtung für eine Schleifmaschine. Diese Überwachungseinrichtung beruht auf einem Programm, das die Bewegung von Schleifscheiben einer Schleifmaschine steuert, wobei das Programm eine Kalibrierung bei unbekanntem Werkstückdurchmesser gestattet.

Zur Qualitätskontrolle sind häufig Messungen erforderlich, die gegebenenfalls automatisch ausgeführt werden sollen. Dazu dienen Messeinrichtungen mit taktilen optischen oder anderweitigen Messaufnehmern. Die Messeinrichtungen können Teil der Schleifmaschine oder in Form einer gesonderten Messmaschine realisiert sein. Die Bewegung des Prüflings und der Sensoren, die Abfrage derselben und die Messwertverarbeitung muss wiederum von einem Messprogramm gesteuert werden, das von dem Bediener zu erstellen ist.

Ein system zur Generierung von Messprogrammen auf Grundlage von Geometriedarstellungen ist aus der DE 196 25 542 A1 bekannt.

Veränderungen an dem Schleifprogramm (NC-Programm zur Steuerung der Schleifmaschine) erzwingen in vielen Fällen auch die Änderung des Messprogramms. Der Bediener muss für beides sorgen.

Aus der US-PS 6,290,571 B1 ist ein Programmsystem bekannt, mit dem die Erstellung des NC-Programms ohne detaillierte Kenntnis der Maschinengeometrie und der NC-Programmiertechnik möglich ist. Dazu werden die Abbildung eines Rohlings und die Abbildung einer Schleifscheibe oder eines sonstigen Schleifwerkzeugs auf einem Bildschirm relativ so zueinander bewegt, dass auf dem Bild virtuell das gewünschte Werkstück entsteht. Die dabei durchlaufenden Werkstück- oder Werkzeugbahnen werden aufgezeichnet und in NC-Programme umgesetzt.

Die Vermessung der auf diese Weise entstandenen Werkzeuge ist eine separate Aufgabe, für die US-PS 6,290,571 keine Lösung angibt.

Davon ausgehend ist es Aufgabe der Erfindung, eine Einrichtung zu integrierten Werkzeugfertigung zu schaffen.

Außerdem ist es Aufgabe der Erfindung, ein Verfahren zum Steuern einer Werkzeugmaschine und einer zugehörigen Messeinrichtung anzugeben. Die Bedienung der Einrichtung und die Durchführung des Verfahrens sollen für einen Bediener möglichst ohne Kenntnis von Programmiersprachen möglich sein.

Diese Aufgaben werden durch eine Einrichtung nach Anspruch 1 sowie durch den entsprechenden Verfahrensanspruch gelöst:

Die Einrichtung zur integrierten Werkzeugfertigung weist ein Eingabemodul mit einer vorzugsweise graphischen Bedienoberfläche auf. Das Eingabemodul enthält eine Anzeigeeinrichtung oder ist mit einer solchen verbunden. Auf dieser lassen sich mehrere Eingabefenster und mindestens ein Anzeigefenster öffnen. Die Eingabefenster verschaffen Zugang zu einem Vorrat von Eingabeobjekten. Eingabeobjekte beziehen sich regelmäßig auf einen Bearbeitungsvorgang. Sie können deshalb als Bearbeitungsobjekte angesehen werden und kennzeichnen z.B. einen ganzen Bearbeitungsvorgang. Z.B. ist ein Schleifvorgang, bei dem das Schleifwerkzeug einen vollständigen Zustellweg durchläuft, ein Bearbeitungsvorgang in vorgenanntem Sinne. Beispielsweise erhält man beim Entlangführen einer Schleifscheibe an einem zylindrischen Rohling auf einem schraubenförmigen Weg, eine schraubenförmige Spannut. Eine solche Spannut stellt ein Beispiel für ein Eingabeobjekt dar. Beispielweise werden Schneidkanten eines Werkzeugs durch Überlagerung von Softwareobjekten, d.h. von Eingabeobjekten erzeugt. Die Überlagerung erfolgt dabei durch Datenverarbeitung so, wie wenn der durch den Bearbeitungsvorgang geschaffene Freiraum von einem Rohling oder einem teilbearbeiteten Werkstück weggenommen wird. Schneidkanten oder andere Körperkanten entstehen dabei, indem die räumliche Summe aller Bearbeitungsobjekte von dem Rohling subtrahiert wird. Körperkanten entstehen dann als Schnittlinien von Eingabeobjekten mit dem Rohling sowie als Schnittlinien zwischen einander überlagernden Softwareobjekten.

Ein anderes Beispiel für Eingabeobjekte sind Freiflächen, die ebenfalls jeweils durch eine Relativbewegung zwischen Schleifscheibe und Werkstück erzeugt werden. Letztendlich charakterisieren Eingabeobjekte somit immer eine Relativbewegung zwischen Schleifscheibe und Werkstück. Diese Eingabeobjekte sind Softwareobjekte und beispielsweise über Menüs auswählbar. Zu jedem Eingabeobjekt gehört wenigstens ein Parameter oder ein Parametersatz, mit dem dann beispielsweise die Länge, die Tiefe, die Steilheit und weitere Einzelheiten einer Spannut oder sonstige Details eines sonstigen Eingabeobjekts festgelegt werden. Auch diesen Eingabeparametern sind im Rahmen des Eingabemoduls Eingabefenster oder - felder zugeordnet, die eine Datenerfassung ermöglichen. Der Bediener kann somit am Bildschirm ein Werkstück anhand von Zeichnungsdaten generieren, ohne sich einer Programmiersprache bedienen zu müssen. Er wählt aus dem Vorrat von Eingabeobjekten lediglich die Eingabeobjekte aus, deren zugeordnete Bearbeitungsoperationen an dem Rohling durchgeführt werden müssen und parametrisiert diese Objekte. Dies erfolgt durch Eintrag von Werten in Bildschirmmasken.

Während der Bediener nun auf diese Weise einen Datensatz zur Beschreibung des Werkstücks generiert, kann er die zur Erstellung des Messprogramms erforderlichen Eingaben tätigen. Dazu hält das Eingabemodul einen Vorrat von Messobjekten bereit, aus denen Messobjekte ausgewählt und parametrisiert werden können. Die Parametrisierung erfolgt beispielsweise durch Verknüpfung von Messobjekten mit Eingabeobjekten. Beispielsweise können als Messobjekte Inspektionspunkte festgelegt werden, deren Abstand von der Drehachse (Radius), deren Abstand zu anderen Inspektionspunkten, deren Abstand zu Körperkanten usw. erfassbar ist. Andere Messobjekte können beispielsweise Winkel sein, die durch Eingabe von mehreren Inspektionspunkten, Linienflächen oder ähnlichem festgelegt werden. Die Verknüpfung zwischen Inspektionspunkten oder anderen Messobjekten mit Eingabeobjekten kann beispielsweise erfolgen, indem ein Inspektionspunkt an eine Körperkante, beispielsweise eine Schneidkante gebunden wird. Ist diese Verknüpfung festgelegt, hat eine Änderung der Parametrisierung eines Eingabeobjekts, das zu einer Verschiebung der Schneidkante führen würde, zugleich auch eine Verschiebung des betreffenden Inspektionspunkts zur Folge, der an diese Schneidkante gebunden ist.

Die erfindungsgemäße Einrichtung enthält ein Darstellungsmodul zur visuellen Darstellung einer Abbildung eines sich aus den Eingaben erzeugenden Werkzeugs, das hier als Werkstück dient. Das Darstellungsmodul kann mit dem gleichen Monitor zusammenwirken wie das Eingabemodul. Es kann mit dem Eingabemodul zu einem Programmmodul verschmolzen sein oder sich mit diesem teilweise überlappen, Ressourcen und/oder Routinen teilen. Das Darstellungsmodul gestattet eine sofortige intuitive Erfassung der Konsistenz und Richtigkeit der durch Auswahl von Eingabeobjekten und deren Parametrisierung vorgenommenen Eingaben.

Weiter ist ein Bearbeitungsprogrammmodul vorgesehen, das aus den Eingabeobjekten und deren Parametern ein Maschinensteuerprogramm erzeugt, das an die Schleifmaschine übergeben werden kann. Es handelt sich hier um ein NC-Programmgenerator.

Außerdem enthält die erfindungsgemäße Einrichtung ein Messprogrammmodul, mit dem aus den Eingabeobjekten und den Messobjekten ein Messprogramm erzeugt wird. Damit liegt nach Generierung des Werkstücks am Bildschirm nicht nur das NC-Bearbeitungsprogramm sondern parallel dazu auch das NC-Messprogramm vor. Beide Programme sind konsistent zueinander, so dass ein probegefertigtes Werkstück sofort automatisch zu vermessen ist.

Vorzugsweise erfolgt die Verknüpfung zwischen dem Eingabemodul, dem Bearbeitungsprogrammmodul und dem Messprogrammmodul über ein Geometriemodel, das alle Arbeitsanweisungen (Daten über durchzuführende Arbeitsschritte) und eine mathematische Repräsentation des Arbeitsergebnisses (bspw. in Form mathematischer oder tabellarischer Beschreibungen von Oberflächenstrukturen des Werkstücks) enthält. Dies ergibt eine Datenstruktur, bei der Änderungen der Arbeitsanweisungen beispielsweise durch Änderung der Parametrisierung von Eingabeobjekten unmittelbar auch zu einer Anpassung des Messprogramms führen.

Weitere Einzelheiten vorteilhafter Details von Ausführungsformen der Erfindung sind Gegenstand von Unteransprüchen und ergeben sich aus der nachfolgenden Beschreibung sowie der Zeichnung. In der Zeichnung sind Ausführungsbeispiele der Erfindung veranschaulicht. Es zeigen:
Fig. 1 Die Softwarestruktur einer Bearbeitungs- und Messeinrichtung als Blockbild,
Fig. 2 und 3 abgewandelte Ausführungsformen der Softwarestruktur,
Fig. 4 den Datenfluss bei der Gestaltung eines Werkstücks,
Fig. 5 den Datenfluss der Eingabe von Messvorgängen,
Fig. 6 bis 8 Bildschirmmasken zur Eingabe von Eingabeobjekten, Eingabeparametern und Messobjekten.

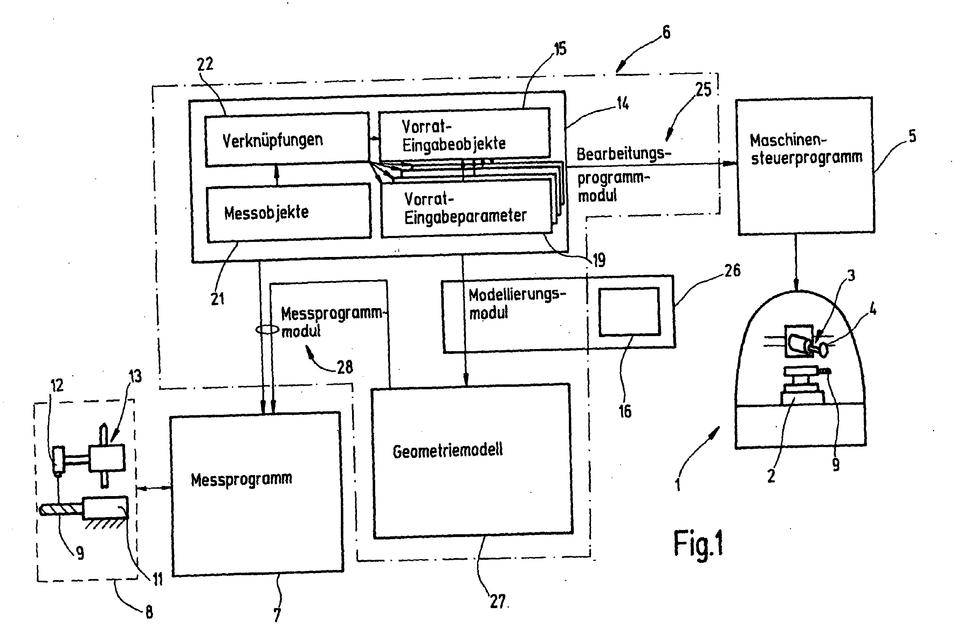

In Figur 1 ist eine Schleifmaschine 1 zum Herstellen von Werkzeugen, wie beispielsweise Bohrern, Fräsern und dergleichen veranschaulicht, die hier somit als Werkstücke bezeichnet werden. Die Schleifmaschine 1 enthält einen Werkstückträger 2, der ruhend oder beweglich gelagert sein kann. Er kann ortsfest oder mittels einer Verstelleinrichtung in ein oder mehreren Raumrichtungen verstellbar sein. Dem Werkstückträger 2 ist ein Schleifkopf 3 mit ein oder mehreren Schleifscheiben zugeordnet. Der Schleifkopf 3 ist in mehreren Raumrichtungen beweg- und schwenkbar. Außerdem ist die Schleifscheibe 4 drehend angetrieben.

Zur Steuerung der Bewegungen des Schleifkopfs 3 und/oder des Werkstückträgers 2 dient ein Maschinensteuerprogramm 5 das mit einem Programmgenerator 6 erzeugt worden ist. Dieser dient auch zur Erstellung eines Messprogramms 7 für eine Messeinrichtung, beispielsweise in Form einer Messmaschine 8, mit der ein von der Schleifmaschine 1 bearbeitetes Werkstück 9 vermessen wird. Dazu weist die Messmaschine 8 einen Werkstückträger 11 sowie ein oder mehrere Messköpfe 12 auf, die über eine Positioniereinrichtung 13 räumlich beweglich sind, um Messpunkte an dem Werkstück 9 abzutasten und entsprechende Messwerte zu liefern.

Die Messeinrichtung kann sowohl, wie dargestellt, als gesonderte Messmaschine 8 als auch als Bestandteil der Schleifmaschine 1 ausgebildet sein.

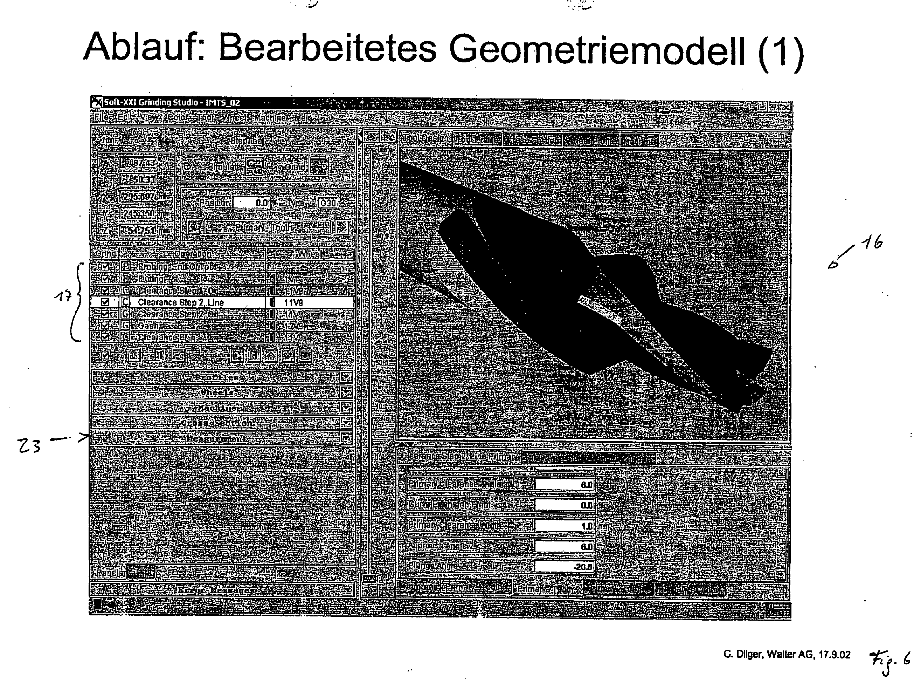

Der Programmgenerator 6 enthält ein Eingabemodul 14, das zur Erfassung aller zur Erstellung eines Maschinensteuerprogramms und zur Erstellung eines Messprogramms erforderlichen Eingaben dient. Die Eingabe erfolgt Objektorientiert anhand von Eingabeobjekten 15, die jeweils einzelnen Bearbeitungsoperationen zugeordnet werden können. Dazu wird auf Figur 6 verwiesen. Diese veranschaulicht eine Bildschirmdarstellung 16, beispielsweise eines PC oder eines an der Schleifmaschine 2 vorgesehenen Computers, auf dem der Programmgenerator 16 läuft. Die Bildschirmdarstellung 16 macht über ein erstes Eingabefeld 17 einzelne Eingabeobjekte eines Objektvorrats zugänglich. In Figur 6 ist beispielsweise das Eingabeobjekt "Clearence Step 2, Line" aktiviert, das durch die helle Unterlegung der betreffenden Zeile sichtbar ist. Die übrigen Eingabeobjekte haben folgende Bedeutung:
Probing - Antasten der Stirnseite des Rohlings zur Nullpunkterfassung.
Fluting - Anlegen von Spannuten. Zu diesem Eingabeobjekt gehören weitere Details, die von Clearence Step 1 bis Clearence Ef reichen. Unter dem Feld "Operation" sind weitere Eingabeobjekte auswählbar. Jedem Eingabeobjekt können verschiedene Werkzeuge zugeordnet werden. Diese sind unter dem Eingabefeld "Wheel" auswählbar. In Figur 6 ist die Auswahl bereits erfolgt und ist in jeder Linie jeweils veranschaulicht.

Dem Eingabeobjekt "Fluting" sind Eingabeparameter zugeordnet, die in der Eingabemaske "Clearence Step 2, Line", primary zugänglich sind. Hier vorhandene Eingabefelder 18 dienen der Parametrisierung des Eingabeobjekts. In die dargestellten Felder können Abmessungen, Verhältnisse und sonstige Eingabeparameter eingegeben werden. In Figur 1 bedeutet dies, dass jedem Eingabeobjekt des Eingabeobjektvorrats 15 ein Eingabeparametervorrat 19 zugeordnet ist.

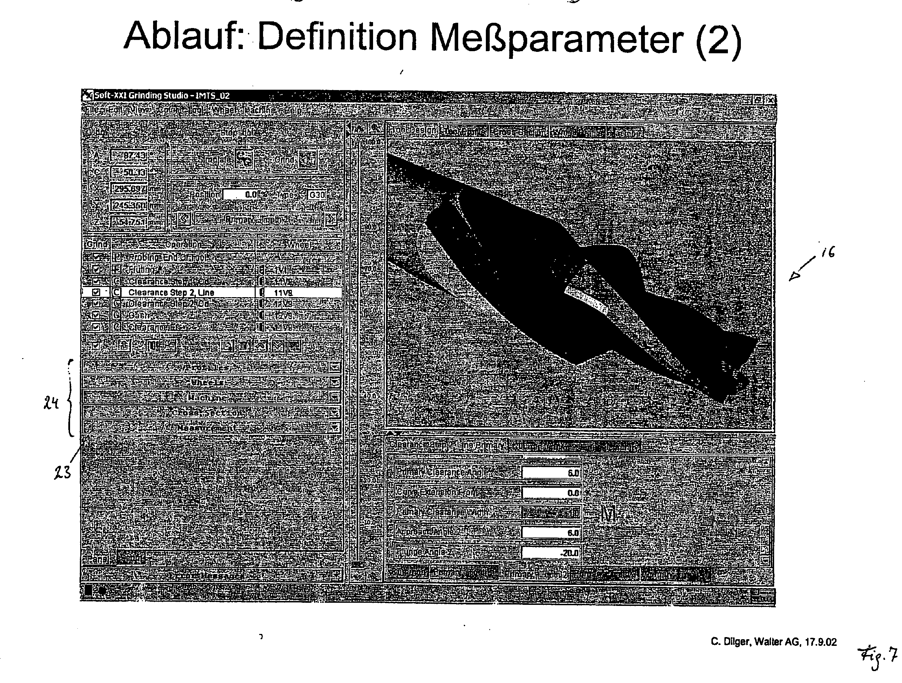

Das Eingabemodul 14 sieht weitere Eingabemöglichkeiten vor. Dazu dienen ein Vorrat 21 von Messobjekten, die mit Verknüpfungen 22, ausgewählten Eingabeobjekten und deren Eingabeparametern zugeordnet sind. Zur Verdeutlichung wird auf Figur 7 verwiesen. Ein Messobjekt kann ein Messparameter, ein Inspektionspunkt, ein Winkel oder dergleichen sein. In Figur 7 ist als Messobjekt ein Messparameter ausgewählt, nämlich die primäre Spannflächenbreite "Primary Clearence With". Die Auswahl dieses Eingabeparameters eines speziellen Eingabeobjekts zugleich als Messobjekt erfolgt durch Öffnen eines Menüs 23 "Measurement" das verschiedene Messobjekte bereithält. Das Menü 23 ist in einem Menüauswahlfeld 24 angeordnet, indem verschiedene Werkstückprofile, Schleifscheiben, Schleifmaschinen und Werkstückquerschnitt jeweils in Untermenüs als Vorrat bereitgehalten werden. Die Definition der "Primary Clearence With" als Messparameter wird in Figur 7 veranschaulicht, durch farbige Hinterlegung des Eingabefeldes und/oder Bezeichnung des Eingabeparameters durch nebenstehendes großes M kenntlich gemacht.

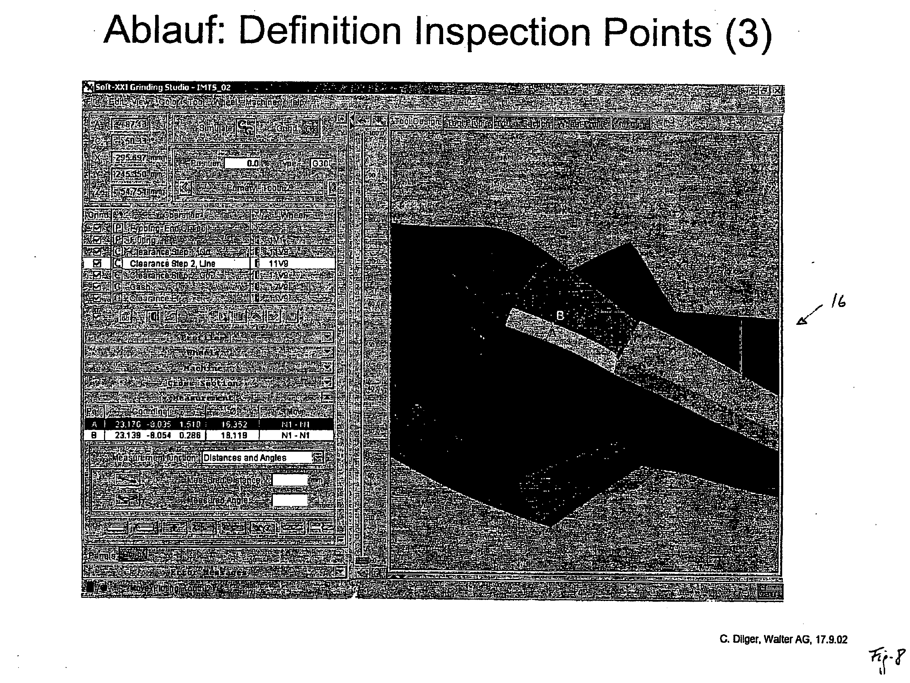

Figur 8 veranschaulicht die Eingabe von Inspektionspunkten als Messobjekte. Dazu ist das Menü "Measurement" geöffnet. In einem Displayfeld der Bildschirmdarstellung 16 ist das durch Eingabe von Eingabeobjekten und deren Eingabeparametern konfigurierte Werkstück visuell veranschaulicht. Per Mausklick können nun hier Inspektionspunkte A, B gesetzt werden, die in dem Menü "Measurement" anhand ihrer Koordinaten und Radien reflektiert werden. Über das Menü "Measurementfunction" wird die Funktion der Inspektionspunkte festgelegt. Im vorliegenden Fall wurde Abstand und Winkel ausgewählt. Nachdem die Inspektionspunkte auf Körperkanten gesetzt worden sind, geht das Programm davon aus, dass diese an die Kanten gebunden sein sollen. Sie werden deshalb mit den Eingabeobjekten verknüpft, die allein oder gemeinsam jeweils die betreffende Kante definieren. Für den Inspektionspunkt A sind das das Eingabeobjekt für das benachbarte Spannraum und für die benachbarte Freifläche.

Zu dem Programmgenerator 3 gehört ein Bearbeitungsprogrammmodul 25. Dieses setzt die mit dem Eingabemodul erfassten Daten in ein Maschinensteuerprogramm um. Dies erfolgt, indem die parametrisierten Eingabeobjekte, die jeweils für sich bereits eine Relativbewegung zwischen Werkstück und Schleifscheibe festlegen, anhand der konkreten Geometrie der ausgewählten Schleifmaschine in NC-Daten umgesetzt werden. Der Programmgenerator 6 enthält außerdem ein Modellierungsmodul. Dieses kann Teil eines Darstellungsmodul 26, oder mit einem solchen verbunden sein. Das Darstellungsmodul 26 arbeitet mit den Displayfeld der Bildschirmdarstellung 16 zusammen. Das Modellierungsmodul erzeugt ein Geometriemodell 27, das eine Repräsentation des zu erzeugenden Werkstücks darstellt. Das Geometriemodell enthält alle Arbeitsanweisungen für die Schleifmaschine 1 sowie eine mathematische Repräsentation des Arbeitsergebnisses, d.h. beispielsweise des fertig bearbeitenden Werkstücks. Alternativ zur obigen Erläuterung kann das Darstellungsmodul 26 nicht an das Modellierungsmodul sondern an das Geometriemodell angeschlossen sein. Das Geometriemodell 27 bildet die Basis zur Erstellung des Messprogramms 7. Dazu dient ein Messprogrammmodul 28, das Daten aus dem Geometriemodell mit Daten über die Messaufgabe zusammenführt. Letztere erhält das Messprogrammmodul aus dem Eingabemodul 14 anhand der definierten Messobjekte 21 und der zugehörigen Verknüpfung 22. Wenn in dem Geometriemodell beispielsweise die Freifläche zwischen den Inspektionspunkten A, B definiert vorliegt und die Messobjekte, d.h. die Inspektionspunkte A, B sowie deren Auswertung, beispielsweise in Form der Bestimmung der Radien und des eingeschlossenen Winkels vorgegebenen ist, kann das Messprogramm die notwendigen Zustellbewegungen der Positioniereinrichtung 13 und die Auswertung der dadurch erhaltenen Daten vorgeben.

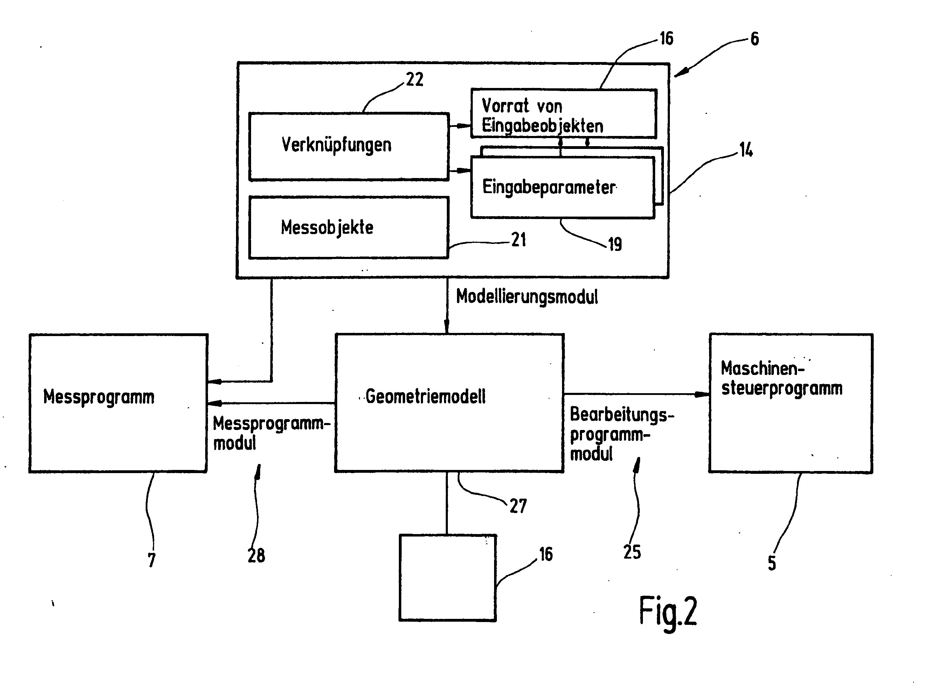

In Figur 2 ist eine abgewandelte Ausführungsform des Programmgenerators 6 vereinfacht veranschaulicht. Die Programmstruktur ist dahingehend abgewandelt, dass das Bearbeitungsprogrammmodul 25 ausgehend von den im Geometriemodel 27 vorhandenen Daten arbeitet. Außerdem beruht die Bildschirmdarstellung 16 auf den Daten des Geometriemodells. Das Messprogrammmodul 28 führt jedoch wie gehabt, Daten aus dem Eingabemodul 14 mit Daten aus dem Geometriemodell 27 zusammen um daraus das Messprogramm 7 zu erstellen.

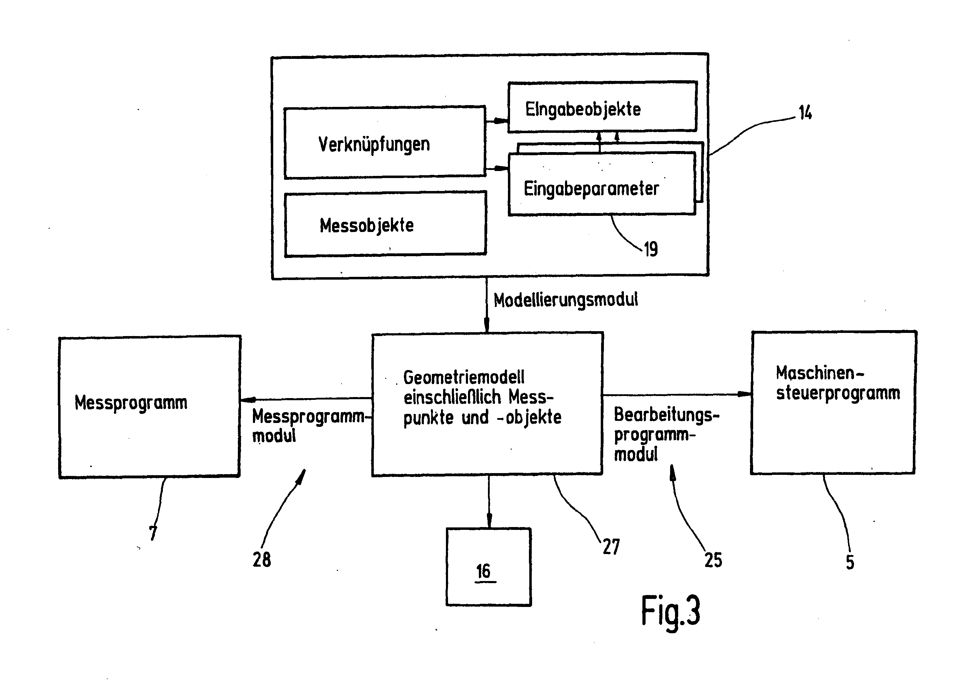

Figur 3 veranschaulicht eine Ausführungsform mit noch weiter zentralisierter Funktion des Geometriemodells 27. Das Geometriemodell enthält hier nicht nur Daten über eine räumliche Präsentation des zu erzeugenden Werkstücks, sowie über die durchzuführenden Bearbeitungsvorgänge sondern außerdem Daten über die auszuführenden Messvorgänge. Diese Daten sind aus dem Eingabemodul 14 übernommen. Sowohl das Bearbeitungsprogrammmodul 25 als auch das Messprogrammmodul 28 arbeiten auf Basis des Geometriemodells 27. Jede Veränderung an den Eingabeparametern an den Messobjekten oder den Verknüpfungen der Messobjekte mit Eingabeobjekten oder deren Parametern wirkt sich somit auf das Geometriemodell und über diese sowohl auf das Maschinensteuerprogramm 5 als auch auf das Messprogramm 7 aus. Außerdem wird synchron die Bildschirmdarstellung 16 angepasst. Für die Bildschirmdarstellung 16 gemäß den Figuren 6 - 8 bedeutet dies beispielsweise, dass nach dem Setzen von Inspektionspunkten A, B anhand der Bildschirmdarstellung 16 diese Eingang in des Geometriemodell finden. Ändert der Bediener nun beispielsweise in dem Menü gemäß Figur 6 einen Eingabeparameterwert, beispielsweise "Primary Clearence With" von 1mm auf 2mm, entsteht sofort die entsprechende Bildschirmdarstellung - zumindest falls eine solche geänderte Bearbeitung im Rahmen des Möglichen liegt. Die veranschaulichte, in Figur 8 hell dargestellte Fläche wird dann entsprechend breiter. Die Inspektionspunkte A, B liegen nun wiederum auf den betreffenden Kanten und sind weiter voneinander entfernt. In dem in Figur 8 veranschaulichten Menü ändern sich angezeigte Werte z.B. in dem Feld "Measured Distance".

Es wird hier besonders darauf aufmerksam gemacht, dass die parametrisierten Eingabeobjekte Bearbeitungsvorgänge darstellen bzw. beschreiben. Nachdem sich Bearbeitungsvorgänge überlagern können, legen die Parameter der Eingabeobjekte die Geometrie des Werkstücks nur mittelbar fest. Dies wird deutlich, wenn die in den Figuren 6 - 8 hell veranschaulichte, durch die Inspektionspunkte A, B eingegrenzte Freifläche betrachtet wird. Das diese Freifläche charakterisierende Eingabeobjekte legt fest, auf welchem räumlichen Weg, die Schleifscheibe geführt wird. Die schneidkantenseitige Grenze dieser Freifläche wird jedoch durch das Eingabeobjekt "Spannraum" festgelegt, denn dessen Parameter besagen, wieviel Material an der Schneidkante abgetragen wird, d.h. wo dieser genau liegt. Die Freiflächenbreite, die durch den Abstand der Inspektionspunkte A, B voneinander festgelegt wird, ist somit keine reiner Eingabewert, sondern sie ergibt sich bei der Bearbeitung. Das Zusammenspiel von Bearbeitungsprogrammmodul 25 und Messprogrammmodul 28 auf der Basis eines gemeinsamen Geometriemoduls 27 gestattet es, nicht nur diese Auswirkungen und gegenseitigen Abhängigkeiten von einzelnen Bearbeitungsvorgängen auf dem Bildschirm zu visualisieren, sondern darüber hinaus das zugehörige Messprogramm zu generieren.

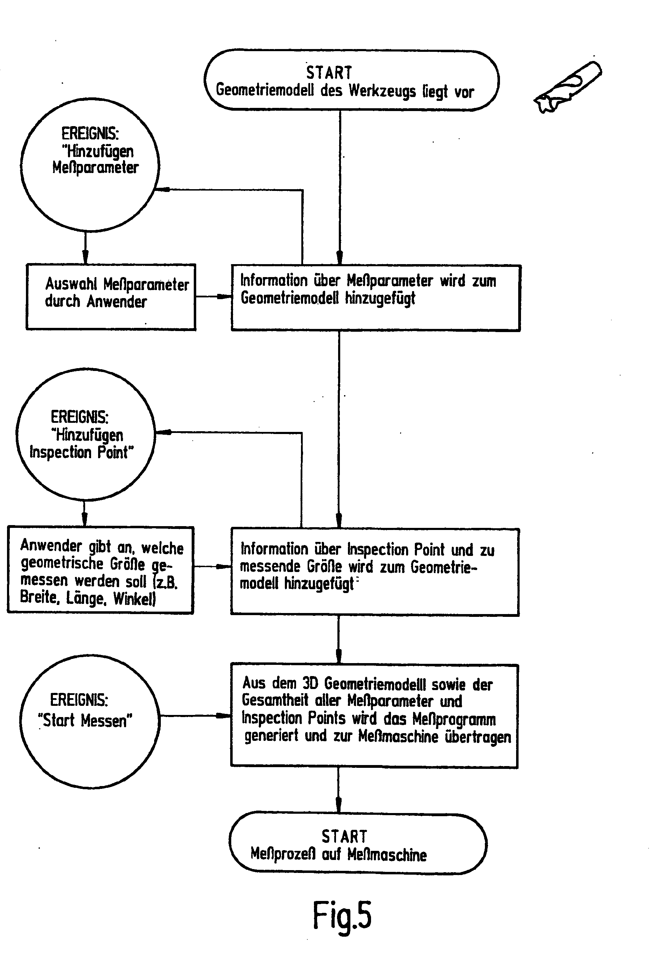

Die Figuren 5 und 6 veranschaulichen die Erzeugung des Maschinensteuerprogramms 5 und des Messprogramms 7 nochmals aus anderer Sicht:

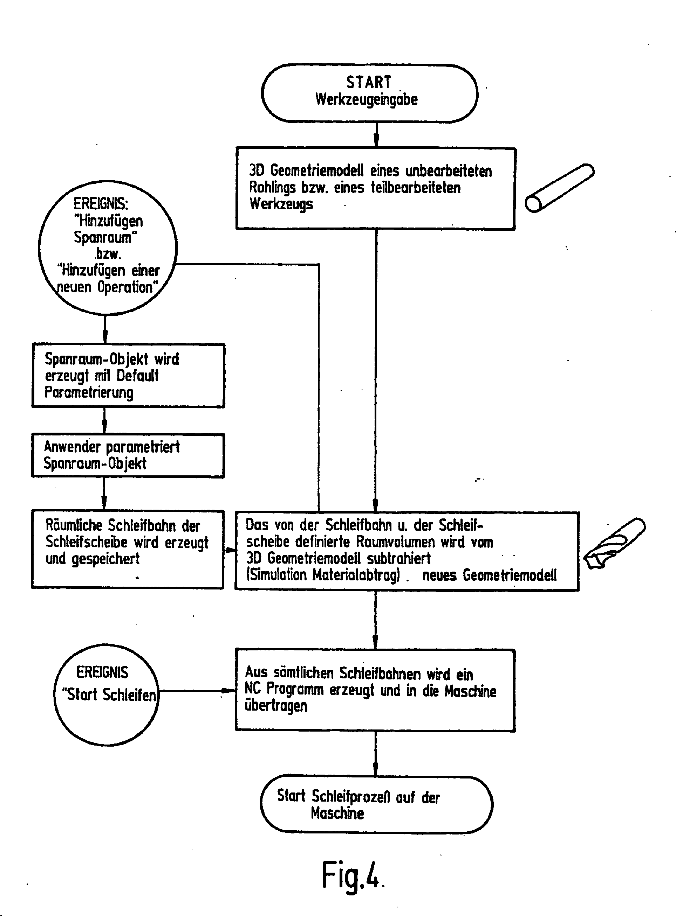

Durch entsprechende Menüeingabe wird zunächst der Typ eines zu erzeugenden Werkzeugs ausgewählt. Dies erfolgt beispielsweise in dem Menü "Profils" gemäß Figuren 6 bis 8. Dazu gehören auch die Festlegung der Zähnezahl wonach entsprechend Karteikarten mit Eingabefeldern 18 (im Beispiel nach Figur 6 - 8 vier Karteikarten für vier Zähne) angelegt werden. Dies entspricht den in Figur 4 oben links in einem runden Feld dargestellten Ereignis, wonach beispielsweise der Spanraum (Flute) oder eine neue Operation eingegeben werden. Es erfolgt darauf, die Parametrisierung des betreffenden Eingabeobjekts zunächst mit Standardwerten, die, wie im nächsten Feld sichtbar wird, vom Anwender geändert werden können.

Im nächsten Schritt erzeugt das Modellierungsmodul (Figur 1, 2 oder 3) die Spur, die eine Schleifscheibe in einem Raum bei ihrer Bewegung gemäß dem ausgewählten und parametrisierten Eingabeobjekt hinterlässt. Die Spur der Schleifscheibe wird gespeichert und im nächsten zentralen Schritt von dem Rohling oder einem bereits teilbearbeiteten Werkzeug subtrahiert. Es entsteht dadurch das Geometriemodell eines Werkstücks, an dem die zuletzt eingegebene Operation ausgeführt worden ist. Dieser Vorgang wird sooft wiederholt, bis alle eingegebenen Operationen an dem Werkstück virtuell ausgeführt worden sind, d.h. bis das Geometriemodell für ein Werkstück mit allen gemäß den Eingabeobjekten auszuführenden Werkstoffabträgen erzeugt worden ist. Ist dieses vorhanden, überprüft und verifiziert, wird daraus das NC-Programm generiert, an die Schleifmaschine übertragen und auf der Schleifmaschine abgearbeitet.

Figur 5 veranschaulicht eine ebenfalls ereignisorientierte Darstellung des Datenflusses bei der Erstellung eines Messprogramms. Es wird von dem fertigen Geometriemodell des Werkzeugs ausgegangen. Dabei wird außerdem angenommen, dass der Bediener beider Erstellung des Werkzeugs am Bildschirm noch keine Mess- und Inspektionspunkte gesetzt hat. Will er dies nun tun, tritt das Ereignis "Hinzufügen Messparameter" ein, indem der Anwender einen Messparameter auswählt. Diese Information über den Messparameter wird zu dem Geometriemodell hinzugefügt. Dieser Vorgang kann nahezu beliebig of wiederholt werden um verschiedene Messparameter zu dem Geometriemodell hinzuzufügen.

Eine weitere Möglichkeit Messungen vorzugeben, ist die Vorgabe von Inspektionspunkten und deren Bedeutung. Dies ist in Figur 5 Mitte-links veranschaulicht. Die Eingabe erfolgt wiederum durch die Masken gemäß Figur 8. Die erhaltene Information wird zu dem Geometriemodell hinzugefügt. Ist das Geometriemodell schlussendlich um alle Messparameter und Inspektionspunkte ergänzt, wird aus dem insoweit vervollständigten dreidimensionalen Geometriemodell das Messprogramm erzeugt und an die Messmaschine übertragen.

## Patentansprüche

1. Einrichtung zur integrierten Werkzeugfertigung,
mit einem Eingabemodul (14), das einen Vorrat (15) von Eingabeobjekten zugänglich macht, die zur Erstellung einer Beschreibung eines Werkstücks (9) dienen, wobei zu jedem Eingabeobjekt ein oder mehrere Eingabeparameter (19) gehören, das die Auswahl von Eingabeobjekten und die Eingabe deren Eingabeparameter (19) gestattet, und das einen Vorrat von Messobjekten (21) zugänglich macht, aus denen Messobjekte (21) auswählbar und mit Eingabeobjekten oder Eingabeparametern verknüpfbar sind,
mit einem Darstellungsmodul (26) zur visuellen barstellung einer Abbildung eines sich aus der getroffenen Auswahl von Eingabeobjekten und den Eingaben ergebenden Werkstücks (9),
mit einem Bearbeitungsprogrammmodul (25), das anhand der getroffenen Auswahl von Eingabeobjekten und den dazu eingegebenen Parametern ein Maschinensteuerprogramm (5) zur Bearbeitung des Werkstücks (9) erzeugt, das zur Steuerung einer Bearbeitungsmaschine (1) dient, und
mit einem Messprogrammmodul (28), das anhand der getroffenen Auswahl von Messobjekten und deren Verknüpfung mit Eingabeobjekten ein Messprogramm zur Steuerung einer Messeinrichtung (7) zur automatischen Vermessung des bearbeiteten Werkstücks (9) erzeugt
wobei jedes Eingabeobjekt mit einer Bearbeitungsoperation verknüpft ist, wobei die Gesamtheit der Bearbeitungsoperationen eine von dem Maschinensteuerprogramm (5) auszuführende Bearbeitungsaufgabe festlegt, und
wobei jedes Messobjekt (21) mit einem Messvorgang verknüpft ist, wobei die Gesamtheit der Messobjekte (21) und die zugehörigen Verknüpfungen (22) die von der Messeinrichtung (8) auszuführende Messaufgabe festlegen.

2. Einrichtung nach Anspruch 1, **dadurch gekennzeichnet, dass** das Darstellungsmodul (26) aus den ausgewählten Eingabeobjekten und den zugehörigen Eingaben ein Geometriemodell (27) bestimmt, das die Oberfläche eines Werkzeugs (9) definiert.

3. Einrichtung nach Anspruch 1, **dadurch gekennzeichnet, dass** die Bearbeitungsmaschine (1) eine Schleifmaschine ist.

4. Einrichtung nach Anspruch 3, **dadurch gekennzeichnet, dass** die Messeinrichtung in die Bearbeitungsmaschine integriert ist.

5. Einrichtung nach Anspruch 1, **dadurch gekennzeichnet, dass** die Messeinrichtung (8) eine Messmaschine ist.

6. Verfahren zum Steuern einer Werkzeugmaschine und einer zugehörigen Messeinrichtung, bei dem durch ein Eingabemodul (14)
a) ein Vorrat von Eingabeobjekten, die zur Erstellung einer.Beschreibung eines Werkstücks (9) dienen, zur Auswahl bereitgestellt wird, wobei zu jedem Eingabeobjekt ein oder mehrere Eingabeparameter gehören, die abgefragt werden, und
b) ein Vorrat von Messobjekten zur Auswahl bereitgestellt wird, wobei Verknüpfungen ausgewählter Messobjekte mit Eingabeobjekten herbeigeführt wird,
durch ein Darstellungsmodul (26) eine Abbildung eines sich aus der getroffenen Auswahl von Eingabeobjekten und den Eingaben ergebender Werkstücks dargestellt wird,
durch ein Bearbeitungsprogrammmodul (25) anhand der getroffenen Auswahl von Eingabeobjekten und den dazu eingegebenen Parametern ein Maschinensteuerprogramm zur Bearbeitung des Werkstücks (9) erzeugt wird, das zur Steuerung einer Bearbeitungsmaschine (1) dient, und bei dem
durch ein Messprogrammmodul (28) anhand der getroffenen. Auswahl von Messobjekten und deren Verknüpfung mit Eingabeobjekten ein Messprogramm zur Steuerung einer Messeinrichtung (8) zur automatischen Vermessung des bearbeiteten Werkstücks (9) erzeugt wird,
wobei aus den ausgewählten Eingabeobjekten, die jeweils mit einer Bearbeitungsoperation verknüpft sind, und aus den zugehörigen Eingaben ein Geometriemodell bestimmt wird, das die Oberfläche eines Werkzeugs definiert und
wobei das Messobjekt einem Messvorgang zugeordnet ist, wobei Messparameter anhand der ausgewählten Eingabeobjekte und zugehöriger Eingabeparameter festgelegt werden.

7. Verfahren nach Anspruch 6, **dadurch gekennzeichnet, dass** das Geometriemodell zur Anzeige gebracht wird.

8. Verfahren nach Anspruch 6, **dadurch gekennzeichnet, dass** Messobjekt einem Messvorgang zugeordnet ist, wobei Messparameter anhand des Geometriemodells festgelegt werden.

9. Verfahren nach Anspruch 6, **dadurch gekennzeichnet, dass** zu den Messparametern Inspektionspunkte gehören.

10. Verfahren nach Anspruch 9, **dadurch gekennzeichnet, dass** überprüft wird, ob Inspektionspunkte auf Flächen oder Kanten des Geometriemodells liegen.

11. Verfahren nach Anspruch 10, **dadurch gekennzeichnet, dass** eine Korrekturaufforderung ausgegeben oder eine automatische Korrektur durchgeführt wird.

## Claims

1. Assembly for integrated tool manufacturing,
with an input module (14), which makes accessible a store (15) of input objects, which serve to create a description of a workpiece (9), wherein each input object includes one or more input parameters (19) that allows the selection of input objects and the input of their input parameters (19), and which makes accessible a store of measurement objects (21), from which measurement objects (21) can be selected and linked with input objects or input parameters,
with a display module (26) for visual display of an image of a workpiece (9) resulting from the performed selection of input objects and the inputs,
with a machining program module (25), which on the basis of the performed selection of input objects and the parameters input for this purpose, generates a machine control program (5) for machining the workpiece (9), which serves to control a machining unit (1), and
with a measurement program module (28), which on the basis of the performed selection of measurement objects and their linkage to input objects, generates a measurement program for controlling a measuring device (7) for the automatic measurement of the machined workpiece (9),
wherein each input object is linked with a machining operation, wherein the totality of the machining operations determines a machining task to be performed by the machine control program, and
wherein each measurement object (21) is linked with a measurement process, wherein the totality of the measurement objects (21) and the associated linkages (22) determines the measurement task to be performed by the measuring device (8).

2. Assembly according to claim 1, **characterised in that** from the selected input objects and the associated inputs, the display module (26) determines a geometric model (27), which defines the surface of a tool (9).

3. Assembly according to claim 1, **characterised in that** the machining unit (1) is a grinding machine.

4. Assembly according to claim 3, **characterised in that** the measuring device is integrated into the machining unit.

5. Assembly according to claim 1, **characterised in that** the measuring device (8) is a measuring machine.

6. Method for controlling a machine tool and an associated measuring device, in which by means of an input module (14)
a) a store of input objects serving to create a description of a workpiece (9) is provided for selection, wherein each input object includes one or more input parameters, which are scanned, and
b) a store of measurement objects is provided for selection, wherein linkages of selected measurement objects with input objects are performed,
by means of a display module (26) an image of a workpiece resulting from the performed selection of input objects and the inputs is displayed,
by means of a machining program module (25) a machine control program for machining the workpiece (9), which serves to control a machining unit (1), is generated on the basis of the performed selection of input objects and the parameters input for this, and in which
by means of a measurement program module (28) a measurement program for controlling a measuring device (8) for automatic measurement of the machined workpiece (9) is generated on the basis of the performed selection of measurement objects and the linkage thereof with input objects,
wherein a geometric model that defines the surface of a tool is determined from the selected input objects, which are respectively linked with a machining operation, and from the associated inputs, and
wherein a measurement process is associated with the measurement object, wherein measurement parameters are determined on the basis of the selected input objects and associated input parameters.

7. Method according to claim 6, **characterised in that** the geometric model is displayed.

8. Method according to claim 6, **characterised in that** a measurement process is associated with the measurement object, wherein measurement parameters are defined on the basis of the geometric model.

9. Method according to claim 6, **characterised in that** inspection points are included in the measurement parameters.

10. Method according to claim 9, **characterised in that** it is checked whether inspection points lie on faces or edges of the geometric model.

11. Method according to claim 10, **characterised in that** a correction command is output or an automatic correction is performed.

## Revendications

1. Dispositif pour la fabrication intégrée d'outil, qui comprend :
- un module d'entrée (14), qui permet d'accéder à un stock (15) d'objets d'entrée qui servent à établir la description d'un outil (9), chacun de ces objets possédant un ou plusieurs paramètres d'entrée qui permettent de choisir des objets d'entrée et d'introduire leurs paramètres d'entrée (19) ainsi que d'accéder à une réserve d'objets de mesure (21), de sélectionner certains de ces objets et de les corréler à des objets d'entrée ou à des paramètres d'entrée,
- un module de représentation (26) afin de donner visuellement une image de l'outil (9) résultant de la sélection effectuée des objets d'entrée et des entrées,
- un module de programme d'usinage (25) qui, au moyen de la sélection effectuée d'objets d'entrée et des paramètres entrés pour cela, établit pour l'usinage de l'outil (9), un programme de commande de machine (5) qui sert à commander une machine d'usinage (1),
- un module de programme de mesure (28) qui, au moyen de la sélection effectuée d'objets de mesure et de leur rattachement à des objets d'entrée, établit un programme de mesure pour commander un dispositif de mesure (7) destiné à effectuer la mesure automatique de l'outil (9) usiné,
étant précisé que chaque objet d'entrée est rattaché à une opération d'usinage et que l'ensemble des opérations d'usinage détermine une tâche d'usinage à effectuer par l'intermédiaire du programme de commande de machine, chaque objet de mesure (21) étant corrélé à une opération de mesure, l'ensemble de ces objets de mesure ainsi que les corrélations correspondantes (22) déterminant les mesures que doit effectuer le dispositif de mesure (8).

2. Dispositif selon la revendication 1, **caractérisé en ce que** le module de représentation (26) définit à partir des objets d'entrée sélectionnés et des entrées correspondantes un modèle géométrique (27) qui définit la surface externe d'un outil (9).

3. Dispositif selon la revendication 1, **caractérisé en ce que** la machine d'usinage (1) est une rectifieuse.

4. Dispositif selon la revendication 1, **caractérisé en ce que** le dispositif de mesure est intégré à la machine d'usinage.

5. Dispositif selon la revendication 1, **caractérisé en ce que** le dispositif de mesure (8) est une machine de mesure.

6. Procédé pour commander une machine-outil et un dispositif de mesure correspondant, selon lequel
- au moyen d'un module d'entrée (14)
a) un stock d'objets d'entrée servant à établir une description d'un outil (9), est mis à disposition pour sélection, chaque objet d'entrée possédant un ou plusieurs paramètres d'entrée qui sont appelés,
b) un stock d'objets d'entrée est mis à disposition pour sélection et il est établi des corrélations entre des objets de mesure sélectionnés et des objets d'entrée,
- au moyen d'un module de représentation (25) est établie une image de l'outil résultant de la sélection effectuée d'objets d'entrée et des entrées,
- au moyen d'un module de programme d'usinage (26) est établi à l'aide de la sélection effectuée d'objets d'entrée et de paramètres entrés pour cela, un programme de commande de machine pour usiner l'outil (9), servant à commander une machine d'usinage (1),
- au moyen d'un module de programme de mesure (28) est établi, à l'aide de la sélection effectuée d'objets de mesure et de leur corrélation à des objets d'entrée, un programme de mesure pour commander un dispositif de mesure (8) destiné à effectuer la mesure automatique de l'outil usiné (9), étant précisé que :
à partir des objets d'entrée sélectionnés, qui sont corrélés chacun à une opération d'usinage, et à partir des entrées correspondantes est établi un modèle géométrique qui définit la surface externe de l'outil,
à l'objet de mesure est affectée une opération de mesure, et des paramètres de mesure sont déterminés à l'aide des objets d'entrée sélectionnés et des paramètres d'entrée correspondants.

7. Procédé selon la revendication 6, **caractérisé en ce que** le modèle géométrique est visualisé à l'écran.

8. Procédé selon la revendication 6, **caractérisé en ce que** l'objet de mesure est affecté à une opération de mesure, les paramètres de mesure étant déterminés à l'aide du modèle géométrique .

9. Procédé selon la revendication 6, **caractérisé en ce que** des points d'inspection font partie des paramètres de mesure.

10. Procédé selon la revendication 9, **caractérisé en ce qu'**il est contrôlé que les points d'inspection se trouvent sur les surfaces et sur les arêtes du modèle géométrique.

11. Procédé selon la revendication 10, **caractérisé en ce qu'**une demande de correction est délivrée ou une correction automatique est effectuée.
